Europäisches Patentamt

European Patent Office

Office européen des brevets

(19)

(11) Publication number: **0 058 766**
**B1**

(12) **EUROPEAN PATENT SPECIFICATION**

(45) Date of publication of patent specification: **07.08.85**

(51) Int. Cl.⁴: **B 23 K 1/08**

(21) Application number: **81109568.6**

(22) Date of filing: **07.11.81**

(54) **Soldering apparatus.**

(30) Priority: **23.02.81 JP 25873/81**
**07.04.81 JP 52718/81**

(43) Date of publication of application:
**01.09.82 Bulletin 82/35**

(45) Publication of the grant of the patent:
**07.08.85 Bulletin 85/32**

(84) Designated Contracting States:
**DE FR GB NL**

(56) References cited:
**EP-A-0 055 323**
**EP-A-0 067 939**
**FR-A-2 167 820**
**GB-A-1 099 330**
**US-A-4 101 066**

(73) Proprietor: **Matsushita Electric Industrial Co., Ltd.**
**1006, Oaza Kadoma**
**Kadoma-shi Osaka-fu, 571 (JP)**

(72) Inventor: **Murakami, Schuichi**
**47-5, Yamanoue 5-chome**
**Hirakata-shi Osaka-fu (JP)**
Inventor: **Matsuda, Chuichi**
**C48-103, 6, Meitoku 1-chome**
**Neyagawa-shi Osaka-fu (JP)**
Inventor: **Saeki, Keizi**
**3-46-203, Sengokuhigashimachi**
**Kadoma-shi Osaka-fu (JP)**

(74) Representative: **Eisenführ & Speiser**
**Martinistrasse 24**
**D-2800 Bremen 1 (DE)**

Courier Press, Leamington Spa, England.

## Description

The present invention relates to a soldering apparatus for a printed circuit board comprising a first solder tank and a second solder tank which are provided independently of each other so as to store molten solder; a first nozzle and a second nozzle which are disposed, respectively, in said first solder tank and said second solder tank so as to spout therefrom the molten solder for providing a first and second solder wave; a first pump device and a second pump device which are provided independently of each other so as to supply the molten solder to said first nozzle and said second nozzle, respectively; said second nozzle discharging said second solder wave therefrom so that said second solder wave is disposed above said first solder wave; means for conveying said printed circuit board so that a lower surface of said printed circuit board may be sequentially brought into contact with the solder waves discharged from said first nozzle and said second nozzle; said printed circuit board being passed through said first solder wave so as to depart from said first solder wave at a forward position with respect to an uppermost point of said first solder wave in a direction of conveyance of said printed circuit board; said printed circuit board being conveyed slantways in accordance with a difference in height between said first solder wave and second solder wave.

Conventionally, soldering of chip type elements of the above described type has been effected through a jet or spouting type soldering process in which molten solder is spouted or applied onto a soldering face of a printed circuit board while the printed circuit board is conveyed. The spouting type soldering process is classified into two systems according to the forms of the spouting molten solder waves. One is a so-called double direction solder wave spouting method in which two waves of molten solder are so discharged as to be approximately symmetrical with respect to a nozzle thereof. The other is a so-called single direction solder wave spouting method in which a wave of molten solder is discharged in a direction opposite to that of conveyance of the printed circuit board. However, the above-described two methods have such serious disadvantages as described below.

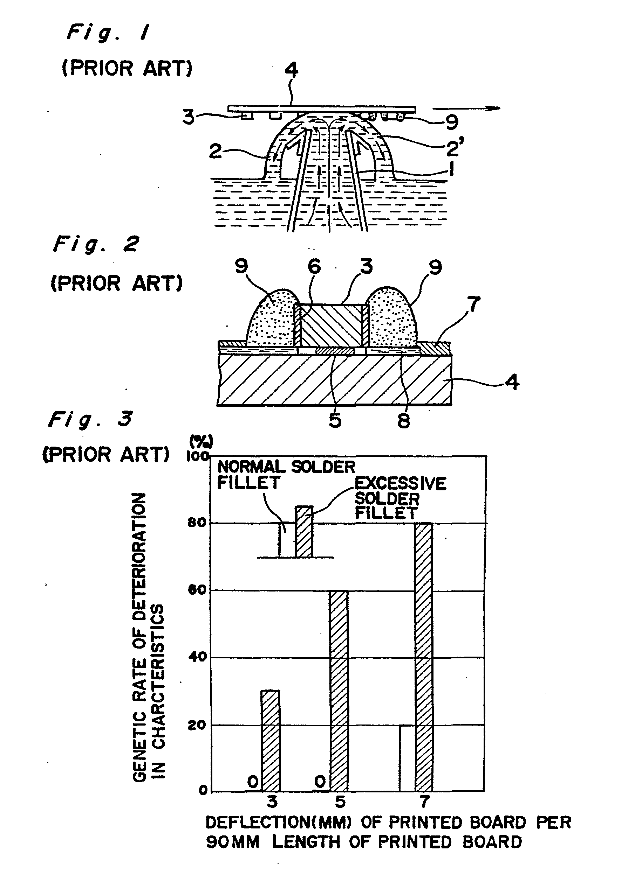

Namely, in the double direction solder wave spouting method, two waves 2 and 2' of molten solder are so discharged from a nozzle 1 as to be symmetrical with respect to the nozzle 1 and a printed circuit board 4 provided with chip type elements 3 is conveyed from the left side to the right side as shown in Fig. 1. Since the solder wave 2' flows down in the same direction as conveyance of the printed circuit board 4 when the printed circuit board 4 departs from the solder wave 2', excessive solder adheres to the chip type elements 3 and thus, excessive solder padding or fillet 9 is formed at a conductor portion 8 of the printed circuit board 4, which is surrounded by electrodes 6 and a solder resist 7 of each chip type element 3 fixed to the printed circuit board 4 by an adhesive 5, as to the disposed above each chip type element 3 as shown in Fig. 2.

Meanwhile, when a completed printed circuit board is subjected to deformation (bending) due to an external force or heat, chip type elements will crack readily since they are rigidly fixed by excessive solder fillet to the printed circuit board, thus leading to possible deterioration in characteristics thereof, as shown in Fig. 3. Accordingly, defective circuits may result when such a printed circuit board is mounted on an electronic apparatus or the apparatus is put on the market.

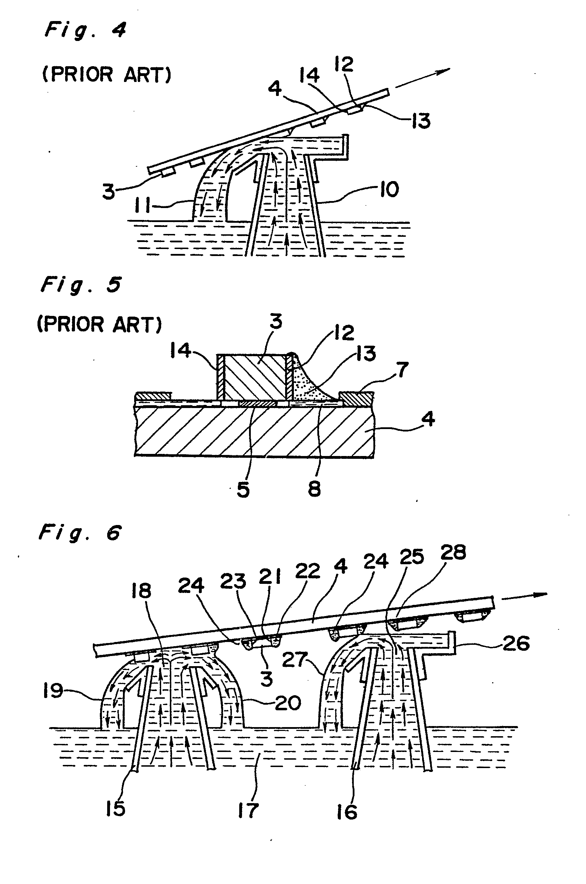

On the other hand, the single direction solder wave spouting method is designed to eliminate the above-described excessive solder paddings or fillets. Namely, as shown in Fig. 4, it is so arranged that a solder wave 11 flows from a nozzle 10 in a direction opposite to that of conveyance of the printed circuit board 4 and the printed circuit board 4 passes through the solder wave 11 so as to be inclined upwards with respect to the direction of conveyance of the printed circuit board 4. Since, in this method, the solder wave 11 flows down in the direction opposite to that of conveyance of the printed circuit board 4 when the circuit board 4 exits from the solder wave 11, the solder padding or fillet is dragged into the solder wave 11, without forming excessive padding or fillets. However, since the solder wave 11 is applied to only one side of chip type elements 3, that is, only in a direction from the right side to the left side as shown in Fig. 4, a normal solder fillet 13 is obtained at a forward portion 12 of each chip type element 3 with respect to the direction of conveyance of the printed circuit board 4 so as not to exceed a height of each chip type element 3, but no fillet is formed at a backward portion 14 thereof as shown in Fig. 5 because vaporized flux is not removed by the solder wave 11 and remains at the backward portion 14, whereby manual solder fillet of the backward portion 14 must be necessarily performed thereafter.

A soldering apparatus of the above described double direction solder wave spouting type is known from US—A—4,101,066. The known soldering apparatus for a printed circuit board comprises a bidirection solder wave-forming assembly comprising separated first and second solder flow chambers for forming a first and second solder wave, respectively. The separated first and second solder flow chambers include a first and second solder tank which are provided independently of each other in order to store molten solder therein and a first and second nozzle which are disposed in the respective solder tank so as to spout therefrom molten solder to provide a first and second solder wave. The solder waves are controlled by a first and second variable speed motor such that the velocity of the solder and each of the solder waves can be controlled independently by means of independent pumping systems. The printed circuit board is conveyed along a predetermined path and initially engages the first solder wave which flows counter to the direction of the printed circuit board movement and subsequently engages the second solder wave flowing in the direction of board movement, whereby the printed circuit board is conveyed slantways in accordance with a difference in height between the first solder wave and the second solder wave. However, in case of soldering chip type elements or components without lead wires such as resistors, capacitors, etc. onto printed circuit boards and due to the fact that the second solder wave flows down in the same direction as conveyance of the printed circuit board when the printed circuit board departs from the second solder wave molten solder readily adheres to the chip type element and thus, excessive solder padding of fillet is formed at a conductor portion of the printed circuit board with consequent frequent occurrence of soldering defects such as bridges and short circuits between adjacent chip type elements. Moreover, when a completed printed circuit board is subjected to deformation due to an external force or heat, chip type elements will crack readily since they are rigidly fixed by excessive solder fillet to the printed circuit board, thus leading to possible deterioration in characteristics thereof. Accordingly, defective circuits may result when such a printed circuit board is mounted on an electronic apparatus.

In GB—A—1 099 330 a process for soldering a printed circuit board is disclosed wherein a work is initially brought into contact with a substantially symmetrical wave of molten solder derived from a solder bath and thereinafter the solder-coated surface is brought into contact with a separate asymmetrical flow of molten solder derived from the same bath but directed against the direction of travel of the work relatively to said asymmetrical flow of molten solder. In the known nozzle arrangement, however, the second nozzle for spouting the second solder wave in a direction against the direction of travel of the work is disposed below or at best at the same height of the first solder nozzle for spouting the first solder wave which is spouted symmetrically. Furthermore, in the known arrangement both nozzles are connected to a common solder tank such that the solder is supplied from only one tank and separately discharged into the first and second solder nozzle. Thus, there is no possibility for controlling the height of the solder waves spouted from the first and second nozzle independently of each other. This structure in connection with the same height of both solder nozzles results in such defects in the case of soldering chip type elements that excessive solder fillets are formed at a conductor portion of the printed circuit board as described above.

Thus, according to the known spouting type soldering methods, defective soldering may result, which requires modifications or repairing through manual operations. However, such manual modifications have posed a more serious problem that chip type elements are readily damaged due to local heating by a soldering iron used therefor.

There is further described in EP—A—0055323, a document published on 7th July 1982 thus after the priority date of the present application, a soldering apparatus of the above double direction solder wave spouting type in which the second solder wave flows down in a direction opposite to that of conveyance of the printed circuit board and in which the second nozzle is provided with a weir at a front upper edge thereof so as to direct the molten solder forming the second solder wave in a direction counter to the direction of movement of the printed circuit board.

It is an object of the present invention to provide an improved soldering apparatus for a printed circuit board which performs normal soldering without requiring repairing or modifications at later stages by avoiding surplus solder at the conductor portion of the printed circuit board, which is simple in structure, highly reliable in actual use and suitable for mass production at low cost.

In accomplishing these objects said first nozzle discharges two first solder waves therefrom so that said first solder waves may be formed approximately symmetrically with respect to an outlet of said first nozzle; that said second solder wave flows down in a direction opposite to that of conveyance of said printed circuit board; and that said second nozzle is provided with a weir at a front upper edge thereof so as to direct the molten solder forming said second solder wave in a direction counter to the direction of movement of the printed circuit board.

In accordance with the present invention, the soldering apparatus makes use of two first waves of molten solder which are discharged from the first nozzle as to be formed approximately symmetrically with respect to the first nozzle, the printed circuit board passes through the first solder waves so as to depart from the first solder waves at a forward position with respect to an uppermost point of the first solder waves in a direction of conveyance of the printed circuit board. Then the second wave of molten solder is so discharged from the second nozzle as to be disposed above the first solder waves and to flow down in a direction opposite to that of conveyance of the printed circuit board, and the printed circuit board is conveyed slantways in accordance with a difference in height between the first solder waves and the second solder waves. Thus the second solder wave provides a weir to remove surplus solder so that excessive solder padding of fillet formed by the first nozzle is scraped off by the wave from the second nozzle and thus, normal solder padding is obtained, whereby a soldering apparatus which performs normal soldering has been obtained without necessity for modifications or repairing at later stages.

These and other objects and features of the present invention will become apparent from the following description taken in conjunction with the preferred embodiment thereof with reference to the accompanying drawings, in which:

Fig. 1 is cross-sectional view of the solder waves of a soldering apparatus according to the double direction solder wave spouting method.

Fig. 2 is cross-sectional view, showing, on an enlarged scale, defective soldering by the conventional double direction solder wave spouting method,

Fig. 3 is a graph explanatory of deterioration in characteristics of defective soldering according to figure 2,

Fig. 4 is a cross-sectional view of a solder wave of a soldering apparatus according to the single direction solder wave spouting method,

Fig. 5 is a cross-sectional view, showing, on an enlarged scale, defective soldering by the soldering method according to figure 4,

Fig. 6 is a cross-sectional view of the solder waves of a soldering apparatus according to the present invention,

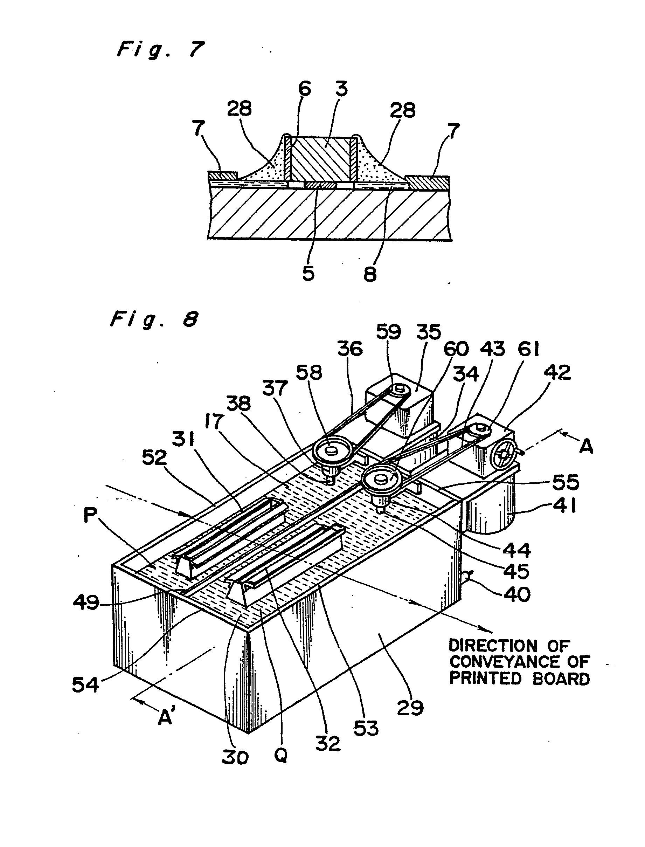

Fig. 7 is a cross-sectional view, showing, on an enlarged scale, normal soldering performed by the soldering apparatus according to figure 6,

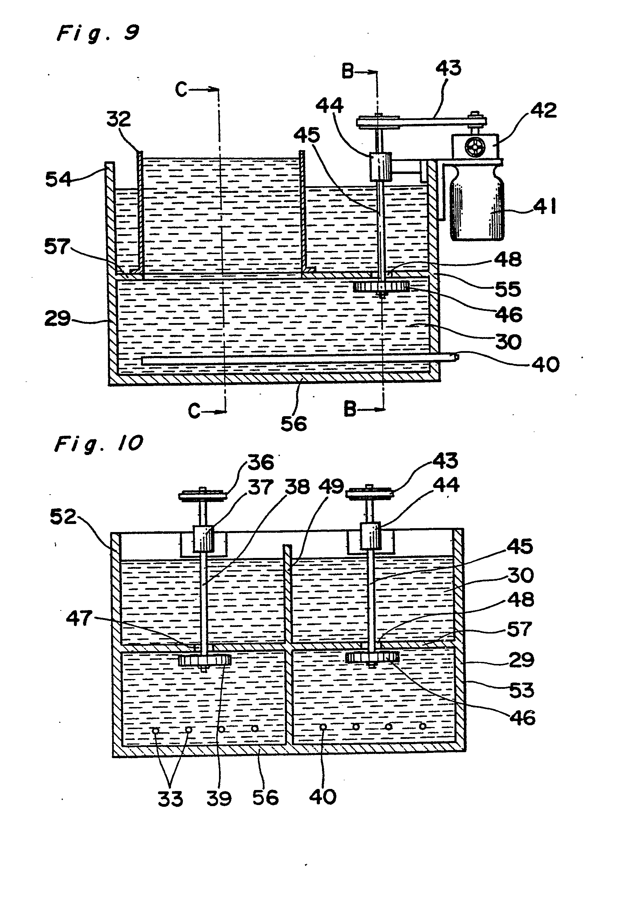

Fig. 8 is a perspective view of the soldering apparatus according to figure 6,

Figure 9 is a cross-sectional view taken along the line A—A' in figure 8,

Fig. 10 is a cross-sectional view taken along the line B—B' in figure 9, and

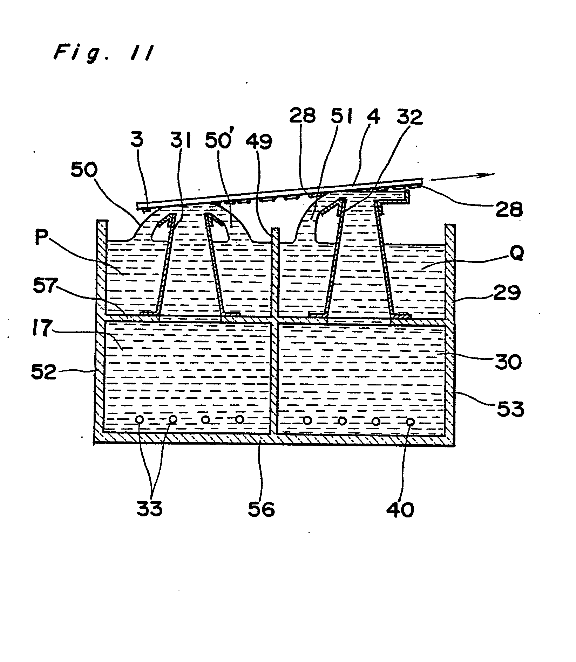

Fig. 11 is a cross-sectional view taken along the line C—C' in figure 9.

Before the description of the present invention proceeds, it is to be noted that like parts are designated by like reference numerals throughout several views of the accompanying drawings.

Referring now to the drawings, there are shown in Fig. 1, solder waves of a soldering apparatus and a printed circuit board 4 which passes through a first nozzle 15 and a second nozzle 16 sequentially. A backward solder wave 19 and a forward solder wave 20 are so formed at the first nozzle 15 as to flow from an outlet 18 down to backward and forward positions with respect to a direction of conveyance of the printed circuit board 4, respectively, so that the backward and forward solder waves 19 and 20 may be formed approximately symmetrically with respect to the first nozzle 15. The backward solder wave 19 is applied to a forward portion 21 of each chip type element 3 provided on the printed circuit board 4 so as to form a forward solder padding or fillet 22 by expelling produced flux gas from the forward portion 21.

Meanwhile, since it is so arranged that the printed circuit board 4 departs from the forward solder wave 20, the forward solder wave 20 is applied to a backward portion 23 of each chip type element 3 so as to form a backward solder padding or fillet 24. As described above, since the forward solder wave 20 flows in the same direction as conveyance of the printed circuit board 4, the backward solder fillet 24 is formed to be excessive in amount.

Then, a second solder wave 27 discharged from an outlet 25 of the second nozzle 16 is forced to flow down in the direction opposite to that of conveyance of the printed circuit board 4 by a weir 26. Since it is so arranged that the second solder wave 27 from the second nozzle 16 is disposed above the backward and forward solder waves 19 and 20 from the first nozzle 15 and the printed circuit board 4 is brought into contact with the second solder wave 27 so as to depart therefrom so that the printed circuit board 4 may be inclined upwards with respect to the direction of conveyance thereof, the excessive solder paddings or fillets 22 and 24 formed by the first solder waves 19, 20 at the first nozzle 15 are scraped off by the second solder wave 27 so as to be absorbed into the second solder wave 27 and thus, normal solder fillets 28 are obtained as shown in Fig. 2.

Thus, according to the present invention, normal solder fillet of chip type elements is obtained as shown in Fig. 2 with elimination of such a disadvantage inherent in conventional soldering apparatuses that excessive or no solder fillet is formed, whereby it becomes possible to achieve normal soldering without necessity for modifications or repairing at later stages. Hereinbelow, the soldering apparatus of the present invention will be described by way of example with reference to Figs. 3 to 6.

A rectangular solder tank 29 for heating and storing molten solder 30 therein comprises side walls 52, 53, 54 and 55, and a bottom wall 56. The side walls 52 and 53 are so provided as to confront each other in a direction of conveyance of the printed circuit board 4. Meanwhile, the side walls 54 and 55 are so provided as to confront each other in the direction at right angles to that of conveyance of the printed circuit board 4. The solder tank 29 is divided, by a vertical partition wall 49 disposed at a central position between the side wall 52 and the side wall 53, into two portions: a first solder tank P and a second solder tank Q and is further provided with a horizontal partition wall 57 disposed approximately at a central position in a vertical direction of each side wall.

Referring to the first solder tank P, a first nozzle 31 and first heaters 33 for heating the molten solder 30 are provided in the first solder tank P. A first motor 34, a first speed change gear 35, a first belt 36, a first bearing 37, a first propeller shaft 38 and a first propeller 39 are provided for discharging two waves of the molten solder 30 in the first solder tank P from the first nozzle 31. The first nozzle 31 is disposed adjacent to the side wall 54 and the first bearing 37 is mounted on the inner surface of the side wall 55 while the first motor 34 which is connected with the first speed change gear 35 is mounted on the outer surface of the side wall 55. The first propeller shaft 38 is rotatably fitted into the first bearing 37 and is provided with the first propeller 39 at one end thereof disposed below the horizontal partition wall 57 and a first driven pulley 58 at the other end thereof disposed above the molten solder 30. A first drive pulley 59 is mounted on a shaft of the first speed change gear 35 so that the first belt 36 may be trained over the first driven pulley 58 and first drive pulley 59.

Meanwhile, referring to the second solder tank Q, a second nozzle 32 and second heaters 40 are provided in the second solder tank Q. A second motor 41, a second speed change gear 42, a second belt 43, a second bearing 44, a second propeller shaft 45, a second propeller 46, a second driven pulley 60, and a second drive pulley 61 are provided for discharging a wave of the molten solder 30 in the second solder tank Q from the second nozzle 32. However, since the second solder tank Q has the same arrangement as the first solder tank P, detailed description thereof is abbreviated here for brevity.

In response to rotation of the first propeller 39 by the first motor 34, first solder waves 50 and 50' are discharged from the first nozzle 31 through an inlet 47 formed on the horizontal partition wall 57.

Likewise, in response to rotation of the second propeller 46 by the second motor 41, a second solder wave 51 is discharged from the second nozzle 32 through an inlet 48 formed on the horizontal partition wall 57.

Meanwhile, since the first motor 34 and second motor 41 are separately provided with the first speed change gear 35 and second speed change gear 42 respectively as described above, the first solder waves 50 and 50' and the second solder wave 51 can be changed in height independently with ease.

Accordingly, for example, in the case where printed circuit boards of different thicknesses are processed by a single soldering apparatus, the first solder wave 50 and 50' and second solder wave 51 are made small in height for a printed circuit board of a smaller thickness so as to prevent the molten solder 30 from adhering to the rear side of the printed circuit board 4.

Moreover, since a length of contact of the printed circuit board 4 with the first solder waves 50 and 50' and that with the second solder wave 51, that is, time periods for dipping the printed circuit board 4 in the first solder waves 50 and 50', and the second solder wave 51, respectively can be readily changed by changing heights of the first solder waves 50 and 50', and the second solder wave 51, respectively, the soldering apparatus of the present invention has such an advantage that soldering of high quality can be performed for any printed circuit board 4 irrespective of change in thermal capacity of the printed circuit board 4 due to change in materials or sizes of the printed circuit board 4.

Since the first solder tank P and second solder tank Q which are formed independently of each other are provided with pump devices 39—46 and 58—61 separately in this embodiment as described above, the first solder waves 50, 50' and second solder wave 51 can be changed in height optionally and temperatures of the molten solder 30 in the first solder tank P and second solder tank Q can be readily adjusted.

Meanwhile, since the first solder tank P and second solder tank Q are formed independently of each other, liquid levels of the molten solder 30 in the first solder tank P and the second solder tank Q can be changed in accordance with heights of solder waves 50, 50', 51 discharged from the first nozzle 31 and second nozzle 32, respectively and uniform flow of the solder waves 50, 50', 51 from the first and second nozzles 31, 32 can be obtained by restricting liquid levels of the molten solder 30 and heights of the solder waves 50, 50', 51 in the first solder tank P and the second solder tank Q to a minimum.

Moreover, in this embodiment, the first solder waves 50 and 50' are so discharged from the first nozzle 31 as to be formed approximately symmetrically with respect to the first nozzle 31 in the direction of conveyance of the printed circuit board 4 as shown in Fig. 6 and it is to be noted that the first solder waves 50, 50' should generally be of a constant height free from turbulence so that the first solder waves 50, 50' may be applied to all the chip type elements uniformly.

Accordingly, the present invention is advantageous in that the first solder waves 50, 50' discharged from the first nozzle 31 so as to be symmetrical with respect to the first nozzle 31 in the direction of conveyance of the printed circuit board 4, can be made stabilized and free from turbulence much more easily than other arrangements in which a first solder wave is discharged from the first nozzle so as to flow down either in the same direction or in the opposite direction with respect to the direction of conveyance of the printed circuit board.

As is clear from the foregoing description, in accordance with the present invention, normal soldering of chip type elements to a printed circuit board can be achieved without requiring modifications or repairing thereof.

Subsequently, an experimental result of the present invention will be described with reference to Table 1, hereinbelow.

TABLE 1
Soldering methods and their defects

| Soldering method | Defects and their occurrences | | |
| --- | --- | --- | --- |
| | Dewetting (no adhesion) of solder | Excessive solder fillet | Solder bridge |
| Double direction wave spouting method | 0 case | 15 cases | 4 cases |
| Single direction wave spouting method | 11 cases | 0 case | 0 case |
| Present invention | 0 case | 0 case | 0 case |

Table 1 shows occurrences of defects of soldering through employment of 20 printed circuit boards each having 200 pieces of chip type elements thereon for each one of the double direction wave spouting method, single direction wave spouting method and the present invention. Meanwhile, the column "Solder bridge" refers to a defect that a short-circuit is formed between electrodes of adjacent chip type elements by solder and this defect requires a manual repairing. Table 1 illustrates that no defect occurred in accordance with the present invention.

Accordingly, in accordance with the present invention, defective soldering and repairing thereof through a great amount of manual labor which have frequently occurred in conventional soldering methods are eliminated and a fairly desirable effect that chip type elements put on the market are seldom damaged has been achieved.

**Claim**

A soldering apparatus for a printed circuit board (4) comprising
a first solder tank (P) and a second solder tank (Q) which are provided independently of each other so as to store molten solder (17; 30);
a first nozzle (15; 31) and a second nozzle (16; 32) which are disposed, respectively, in said first solder tank (P) and said second solder tank (Q) so as to spout therefrom the molten solder (17; 30) for providing a first and second solder wave (19, 20, 50, 50'; 27, 51);
a first pump device (39—40; 58, 59) and a second pump device (41—46; 60, 61) which are provided independently of each other so as to supply the molten solder (17; 30) to said first nozzle (15; 31) and said second nozzle (16; 32), respectively;
said second nozzle (16; 32) discharging said second solder wave (27; 51) therefrom so that said second solder wave (27; 51) is disposed above said first solder wave (19, 20; 50, 50');
means for conveying said printed circuit board (4) so that a lower surface of said printed circuit board (4) may be sequentially brought into contact with the solder waves (19, 20; 50, 50'; 27, 51) discharged from said first nozzle (15) and said second nozzle (16);
said printed circuit board (4) being passed through said first solder wave (19, 20; 50, 50') so as to depart from said first solder wave (19, 20; 50, 50') at a forward position with respect to an uppermost point of said first solder wave (19, 20; 50, 50') in a direction of conveyance of said printed circuit board (4);
said printed circuit board (4) being conveyed slantways in accordance with a difference in height between said first solder wave (19, 20; 50, 50') and second solder wave (27, 51);

characterised in that
said first nozzle (15; 31) discharges two first solder waves (19, 20; 50, 50') therefrom so that said first solder waves (19, 20; 50, 50') may be formed approximately symmetrically with respect to an outlet (18) of said first nozzle (15; 31);
that said second solder wave (27; 51) flows down in a direction opposite to that of conveyance of said printed circuit board (4);
and that said second nozzle (16; 32) is provided with a weir (26) at a front upper edge thereof so as to direct the molten solder (17; 30) forming said second solder wave (27; 51) in a direction counter to the direction of movement of the printed circuit board (4).

**Patentanspruch**

Lötapparat für eine gedruckte Schaltungsplatine (4) mit einem ersten Lötmittelbehälter (P) und einem zweiten Lötmittelbehälter (Q), die unabhängig voneinander zur Speicherung geschmolzenen Lotes (17; 30) angeordnet sind;
einer ersten Düse (15; 31) und einer zweiten Düse (16; 32), die jeweils in dem ersten Lötmittelbehälter (P) und im zweiten Lötmittelbehälter (Q) angeordnet sind und aus denen geschmolzenes Lötmittel (17; 30) unter Bildung einer ersten und zweiten Lötmittelwelle (19, 20, 50, 50'; 27, 51) herausströmt;
einer ersten Pumpvorrichtung (39—40; 58, 59) und einer zweiten Pumpvorrichtung (41—46; 60, 61), die unabhängig voneinander angeordnet sind und das geschmolzene Lötmittel (17; 30) der ersten Düse (15; 31) bzw. der zweiten Düse (16; 32) zuführen;

wobei die zweite Düse (16; 32) die zweite Lötmittelwelle (27; 51) so abgibt, daß die zweite Lötmittelwelle (27; 51) höher als die erste Lötmittelwelle (19, 20; 50, 50') ist;

eine Einrichtung zum Transport der gedruckten Schaltungsplatine (4) derart, daß die Unterfläche der gedruckten Schaltungsplatine (4) nacheinander mit den von der ersten Düse (15) under der zweiten Düse (16) abgebenen Lötmittelwellen (19, 20; 50, 50'; 27, 510) in Berührung gebracht wird;

wobei die gedruckte Schaltungsplatine (4) so durch die erste Lötmittelwelle (19, 20; 50, 50') geführt wird, daß sie die erste Lötmittelwelle (19, 20; 50, 50') an einer vorwärts gerichteten Stelle in Bezug auf einen höchsten Punkt der ersten Lötmittelwelle (19, 20; 50, 50') in Transportrichtung der gedruckten Schaltungsplatine (4) verläßt;

und wobei die gedruckte Schaltungsplatine (4) schräg entsprechend dem Höhenunterschied zwischen der ersten Lötmittelwelle (19, 20; 50, 50') und der zweiten Lötmittelwelle (27, 51) transportiert wird;

dadurch gekennzeichnet, daß

die erste Düse (15; 31) zwei Lötmittelwellen (19, 20; 50, 50') abgibt, so daß die ersten Lötmittelwellen (19, 29; 50, 50') angenähert symmetrisch in Bezug auf einen Auslaß (18) der ersten Düse (15; 31) geformt sind;

daß die zweite Lötmittelwelle (27; 51) in einer Richtung entgegengesetzt der Transportrichtung der gedruckten Schaltungsplateine (4) herabfließt;

und daß die zweite Düse (16; 32) mit einem Damm (26) an ihrer vorderen oberen Kante versehen ist, so daß das die zweite Lötmittelwelle (27; 51) bildende, geschmolzene Lot (17; 30) in eine Richtung entgegen der Bewegungsrichtung der gedruckten Schaltungsplatine (4) geleitet wird.

**Revendication**

1. Appareil de soudage pour plaquette à circuits imprimés (4) comprenant:

— une première cuve de soudure (P) et une seconde cuve de soudure (Q) qui sont indépendantes l'une de l'autre de manière à stocker de la soudure à l'état fondu (17; 30);
— un premier ajutage (15; 31) et un second ajutage (16; 32) qui sont disposés, respectivement, dans la première cuve à soudure (P) et dans la seconde cuve à soudure (Q) de manière à éjecter de la soudure à l'état fondu (17; 30) pour fournir une première et une seconde onde de soudure (19, 20, 50, 50'; 27, 51);
— un premier dispositif de pompage (39—40; 58, 59) et un second dispositif de pompage (41—46; 60, 61) qui sont indépendants l'un de l'autre de manière à fournir la soudure à l'état fondu (17; 30) au premier ajutage (15; 31) et au second ajutage (16; 32), respectivement;
— le second ajutage (16; 32) déchargeant la seconde onde de soudure (27; 51) de manière que cette seconde onde de soudure (27; 51) soit disposée au-dessus de la première onde de soudure (19, 20; 50, 50');
— un moyen pour acheminer la plaquette à circuits imprimés (4) de manière qu'une surface inférieure de la plaquette à circuits imprimés (4) soit amenée séquentiellement en contact avec les ondes de soudure (19, 20; 50, 50'; 27, 51) provenant du premier ajutage (15) et du second ajutage (16);
— la plaquette à circuits imprimés (4) traversant la première onde de soudure (19, 20; 50, 50') de manière à se détacher de la première onde de soudure (19, 20; 50, 50') à une position en avant d'un point le plus haut de la première onde de soudure (19, 20; 50, 50') dans une direction d'acheminement de la plaquette à circuits imprimés (4);
— la plaquette à circuits imprimés (4) étant acheminée en étant inclinée en conformité avec une différence de hauteur entre la première onde de soudure (19, 20; 50, 50') et la seconde onde de soudure (27, 51);

caractérisé en ce que:

— le premier ajutage (15; 31) décharge deux premières ondes de soudure (19, 20; 50, 50') de sorte que les premières ondes de soudure (19, 20; 50, 50') peuvent être formées d'une façon approximativement symétrique par rapport à un orifice de sortie (18) du premier ajutage (15; 31);
— la seconde onde de soudure (27; 51) s'écoule dans une direction opposée à celle de l'acheminement de la plaquette à circuits imprimés (4);
— et la second ajutage (16; 32) comporte un déversoir (26) à son bord supérieur avant de manière à diriger la soudure à l'état fondu (17; 30) formant la seconde onde de soudure (27; 51) dans une direction opposée au sens de déplacement de la plaquette à circuits imprimés (4).

*Fig. 1*

(PRIOR ART)

*Fig. 2*

(PRIOR ART)

*Fig. 3*

(PRIOR ART)

NORMAL SOLDER FILLET

EXCESSIVE SOLDER FILLET

GENETIC RATE OF DETERIORATION IN CHARCTERISTICS

DEFLECTION(MM) OF PRINTED BOARD PER 90MM LENGTH OF PRINTED BOARD

Fig. 4

(PRIOR ART)

Fig. 5

(PRIOR ART)

Fig. 6

*Fig. 7*

6  3
28        28
7    28              28    7

5        8

*Fig. 8*

59  35
36        60  43  61
58    34        42
37
38
17
31                    A
52
P                        55
                         41
49                       44
                         45
                         40
54
                    DIRECTION OF
                    CONVEYANCE OF
A'                  PRINTED BOARD
30  Q  32  53  29

*Fig. 9*

*Fig. 10*

4

Fig. 11